# EUROPÄISCHE PATENTSCHRIFT

(11) **EP 3 657 063 B1**
(45) Veröffentlichungstag und Bekanntmachung des Hinweises auf die Patenterteilung: **06.09.2023**
(21) Anmeldenummer: 19000529.8
(22) Anmeldetag: 20.11.2019
(51) Int. Cl.: F16P 3/08, E05B 47/00

(54) **VERRIEGELUNGSEINRICHTUNG MIT ZUHALTUNG FÜR SCHUTZTÜREN**
LOCKING DEVICE WITH CLOSING SYSTEM FOR SAFETY BELTS
DISPOSITIF DE VERROUILLAGE POURVU DE GÂCHETTE POUR PORTES DE PROTECTION

(30) Priorität: 23.11.2018 DE 102018009217
(43) Veröffentlichungstag der Anmeldung: 27.05.2020
(73) Patentinhaber: K. A. Schmersal Holding GmbH & Co. KG, 42279 Wuppertal (DE)
(72) Erfinder: Uhlenbrock, Christian, 58239 Schwerte (DE); Buchwald, Thomas, 40721 Hilden (DE); Cevic, Yasar, 58095 Hagen (DE); Gerbracht, Tobias, 42369 Wuppertal (DE)
(74) Vertreter: Henseler, Daniela

(56) Entgegenhaltungen:
- EP-A1- 2 104 124
- DE-A1-102012 018 080
- DE-U1- 9 212 093
- US-A1- 2011 277 520

## Beschreibung

Die Erfindung betrifft eine Verriegelungseinrichtung mit Zuhaltung für Schutztüren nach dem Oberbegriff des Anspruchs 1.

Eine Verriegelungsvorrichtung ist bekannt aus DE 10 2010 007 388 A1. Mit diesen bekannten Verriegelungseinrichtungen ist es grundsätzlich möglich, Maschinen und Anlagen, von denen im Betrieb eine Gefahr ausgehen kann, gegen unbefugten Zugriff zu sichern. Ein Anlauf solcher Maschinen soll nur dann erlaubt sein, wenn die Verriegelungseinrichtung verriegelt und gegebenenfalls ein "Tür zu"-Signal liefert. Des Weiteren soll ein Zugang zu den Maschinen häufig nur gestattet sein, wenn von den Maschinen keine Gefahr mehr ausgehen kann. Dies wird durch eine so genannte Zuhaltung erreicht, d.h. die Verriegelungseinrichtung wird erst freigegeben, wenn ein Stillstandssignal oder ein ähnliches Signal von der Maschine vorliegt.

Eine bekannte Verriegelungseinrichtung realisiert die Zuhaltung durch einen längsverschiebbaren Stößel in einem Gehäuse oder Rahmenteil, der dazu ausgebildet ist, ein Schaltrad in einem definierten Zustand festzulegen. Die Verriegelung einer Schutztür kann durch einen Betätiger in Form eines Schlüssels bewirkt werden, der am Türteil befestigt wird und in eine Aufnahme am Gehäuse oder Rahmenteil eingeführt wird. Dabei dreht der Betätiger das Schaltrad so, dass der Stößel durch die Kraft einer Feder in eine Vertiefung des Schaltrades einrasten kann. Auf diese Weise kann eine Entnahme des Schlüssels aus der Aufnahme verhindert werden. Zur kontrollierten Freigabe des Schlüssels nach einem Maschinenstillstand wird der Stößel aus einer Rastposition in eine Freigabeposition überführt.

Nachteilig ist jedoch die Notwendigkeit eines Schaltrades, das üblicherweise in einem ersten Gehäuseteil angeordnet ist, während der Stößel in einem zweiten Gehäuseteil sitzt. Es besteht also ein erhöhter Platzbedarf mit der Folge, dass die bekannte Verriegelungseinrichtung nicht kleinbauend ausbildbar ist. Ferner ist nur eine positionstreue Einbringung des Schlüssels in die Aufnahme möglich. Eine fehlschließsichere Zuhaltung ist dann nicht immer gewährleistet oder erfordert gegebenenfalls zusätzliche mechanische Ausrichtungsarbeiten an der Schutztür.

Aus US 2013/0088024 A1 ist eine Verrieglungseinrichtung bekannt, bei der das Sperrglied als Rastkolben ausgebildet ist, der in einer Kolbenlängsrichtung federvorgespannt längsverschieblich geführt ist. Eine Verriegelungseinrichtung ist ferner bekannt aus US 2011/0277520 A1.

Aufgabe der Erfindung ist es daher, eine Verriegelungseinrichtung mit Zuhaltung der genannten Art zu schaffen, die hohe Verriegelungskräfte bereitstellt, einfach aufgebaut und flexibel einsetzbar ist.

Diese Aufgabe wird durch die Merkmale des Anspruchs 1 gelöst.

Hierdurch wird eine Verriegelungseinrichtung mit Zuhaltung für eine Schutztür geschaffen, bei der der getrennte Betätiger eine Arretierungsmulde als eine Eingriffsmulde für einen Sperrkolben aufweist. Die Arretierungsmulde und der Sperrkolben bilden eine mechanische Rastfunktion ab. Der Sperrkolben ist somit ein Rastkolben. Weiter ist über die mechanische Rastfunktion die Möglichkeit zu verriegeln gegeben. Durch die Verriegelung bzw. Sperrung des Sperrkolbens ist das System Zuhaltungseinheit und Betätiger mechanisch miteinander verbunden. Die Rastung ist durch einen durch Federkraft angetriebenen Sperrkolben realisiert, welcher wiederum im Betätiger auf die dort befindliche Arretiermulde läuft.

Die Zuhaltung kann über eine Sperrachse oder einen Sperrstift erfolgen, der im Inneren des Sperrkolbens Rastelemente, wie beispielsweise vier umfänglich verteilte Kugeln, bewegt, was ähnlich dem Ratschenprinzip ablaufen kann. Die Rastelemente sperren den Sperrkolben zur Sperrachse hin und verhindern somit das Einfedern des Sperrkolbens. Sperrachse/Sperrstift können durch einen bistabilen Hubmagneten bewegt werden. Die Position von Sperrachse/Sperrstift und die damit verbundene Sperrung der Verriegelungsfunktion kann sicher überwacht werden.

Neben der Arretierungsmulde befindet sich im Betätiger ein elektronisches Identifizierungselement, insbesondere ein RFID-Tag. Mit einem in der Zuhaltungseinheit befindlichen RFID-Sensor kann die Position des RFID-Tags und damit der Schutzeinrichtung sicher erfasst werden. Gebildet werden kann folglich eine Kombination aus einem berührungslos wirkenden Sensor (RFID) und einer sicheren Zuhaltung zur Absicherung einer Schutzeinrichtung.

Die erfindungsgemäße Verriegelungseinrichtung umfasst dann eine Zuhaltungseinheit und einen Betätiger, der einen kodierbaren RFID-Tag und eine Arretierungsmulde/Eingriffsmulde für den Sperrkolben/Rastkolben aufweist. Der RFID-Tag ermöglicht die Ausbildung der Funktion eines Näherungsschalters mit definiertem Verhalten im Fehlerfall. Die Arretierungsmulde/Eingriffsmulde ermöglicht, dass der Betätiger in einem 180° Winkel stufenlos in eine Aufnahme bzw. einen Betätigerschlitz, der vorzugsweise maulartig ausbildbar ist, eingeführt werden kann. Die Anfahrtsrichtungen sind damit besonders variabel und winkelflexibel.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch einen Längsschnitt einer Verriegelungseinrichtung mit Zuhaltung für Schutztüren mit eingeführtem Betätiger in einer entriegelten Stellung,
Fig. 2 zeigt schematisch und in vergrößerter Darstellung einen Teillängsschnitt der Verriegelungseinrichtung gemäß Fig. 1 im Bereich eines Rastkolbens,
Fig. 3 zeigt schematisch und in vergrößerter Darstellung einen Teillängsschnitt einer Verriegelungseinrichtung in der Art wie Fig. 1 mit einem eingefederten Rastkolben,
Fig. 4 zeigt schematisch und in vergrößerter Darstellung einen Teillängsschnitt der Verriegelungseinrichtung gemäß Fig. 1 mit einem Rastkolben in der verriegelten Stellung,
Fig. 5 zeigt schematisch einen Längsschnitt des Rastkolbens mit seiner Innenkontur,
Fig. 6 zeigt schematisch die möglichen Anfahrtsrichtungen eines Betätigers zu einem Gehäuse der erfindungsgemäßen Verriegelungseinrichtung.

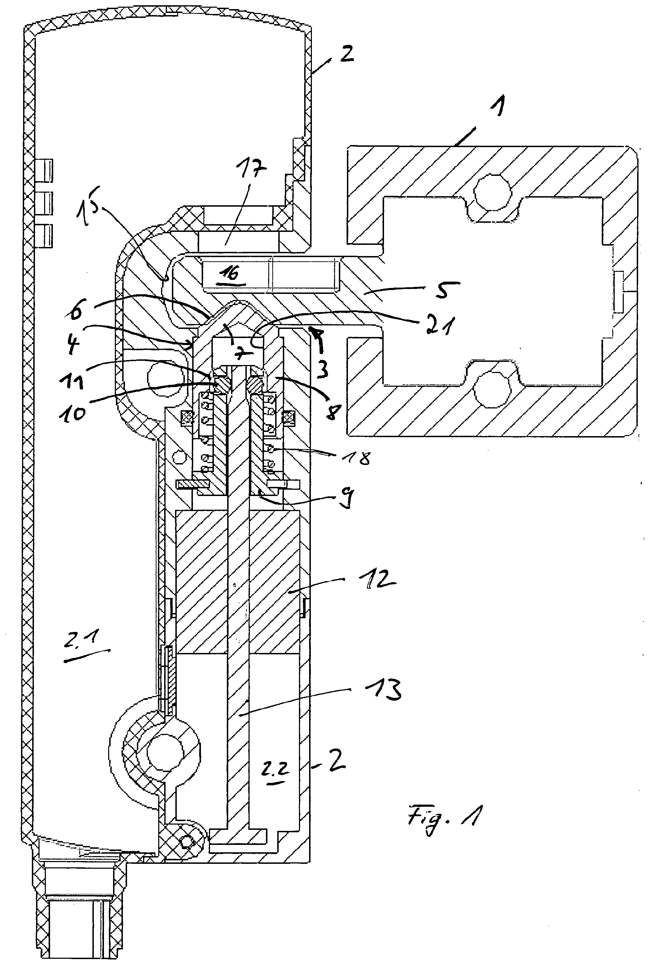

Wie Fig. 1 zeigt, betrifft die Erfindung eine Verriegelungseinrichtung mit Zuhaltung für Schutztüren mit einem an einem beweglichen Türteil befestigbaren mechanischen Betätiger 1 und einem mit dem Betätiger 1 zusammenwirkenden, an einem Türgegenstück befestigbaren Gehäuse 2. Das Gehäuse 2 weist eine Aufnahme 3 auf, der der Betätiger 1 zuführbar ist. Fig. 1 zeigt den Betätiger 1 in einer zugeführten Stellung.

Das Gehäuse 2 weist ein Sperrglied 4 auf, das zwischen einer entriegelten Stellung, bei der der Betätiger 1 freigebbar ist, und einer verriegelten Stellung, bei der der Betätiger 1 gegenüber der Aufnahme 3 festlegbar ist, verlagerbar ist, wie nachstehend noch im Einzelnen beschrieben wird.

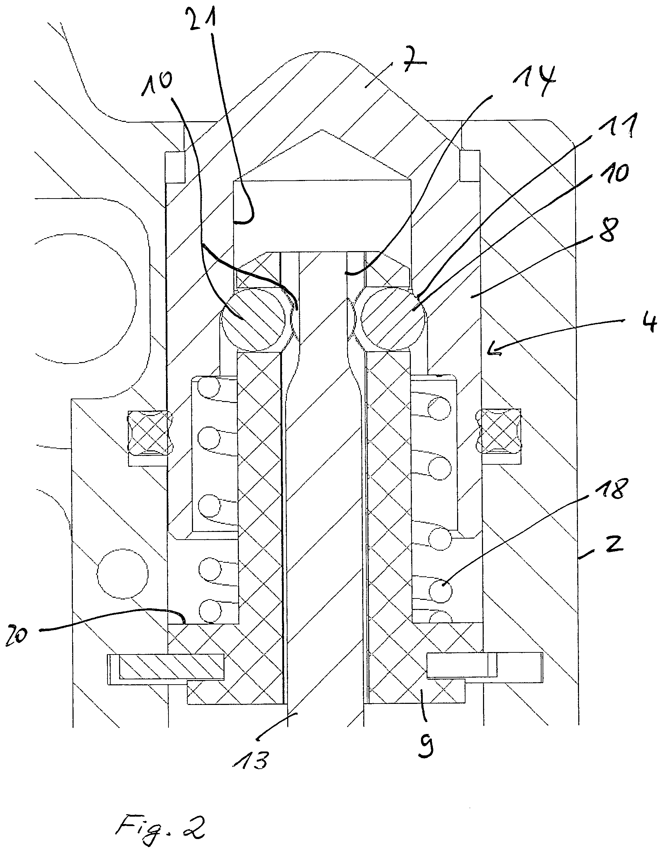

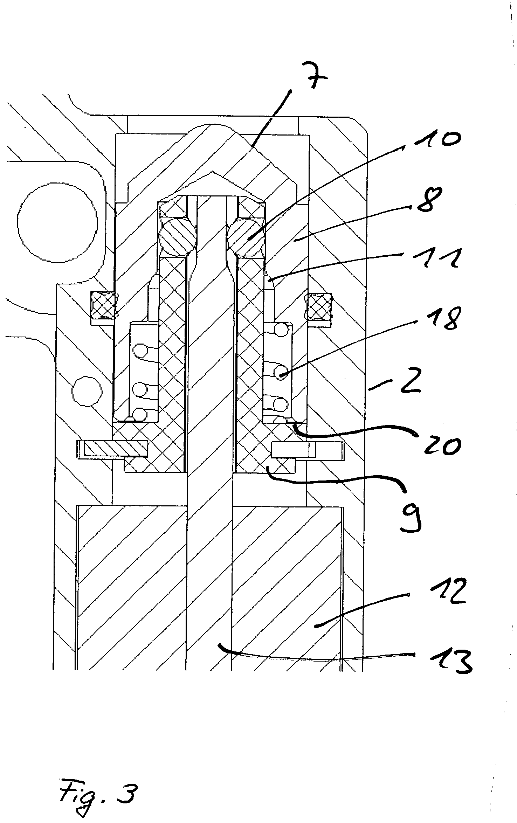

Der Betätiger 1 weist ferner eine Eingriffszunge 5 mit einer Eingriffsmulde 6 für einen mechanischen Wirkeingriff mit einem kopfseitigen Ende 7 eines als Rastkolben 8 ausgebildeten Sperrglieds 4 auf. Der Rastkolben 8 ist in dem Gehäuse 2 in einer Kolbenlängsrichtung federvorgespannt längsverschieblich geführt, wie insbesondere Fig. 2 und Fig. 3 zeigen. Der Rastkolben 8 kann folglich beim Einschieben der Eingriffszunge 5 eines Betätigers 1 in der entriegelten Stellung einfedern, wie Fig. 3 zeigt, und dadurch das Zuführen des Betätigers 1 in einfacher Weise ermöglichen. Dabei können sich die Eingriffsmulde 6 und das kopfseitige Ende 7 durch geeignete Formanpassung selbst zentrieren.

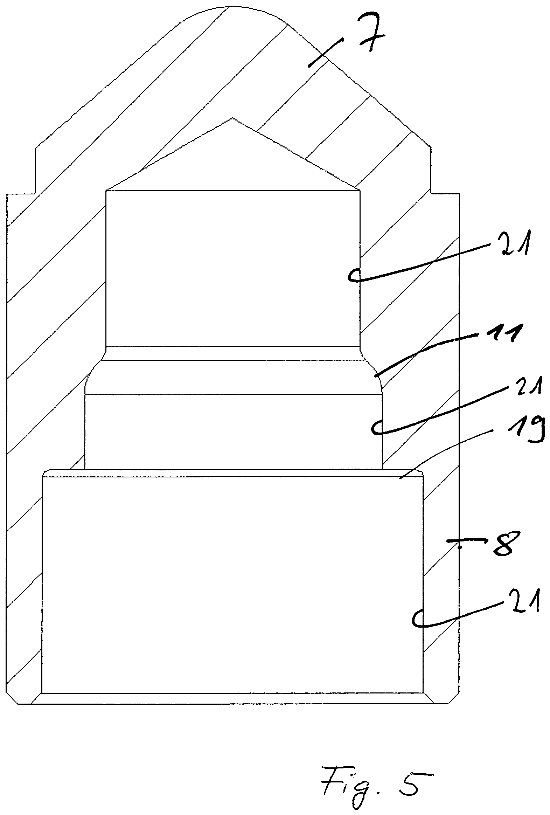

Der Rastkolben 8, der hohlzapfenförmig ausgebildet ist, ist in dem Gehäuse 2 längsverschieblich geführt gegenüber einem inneren, buchsenförmigen Festlager 9, das radial verschieb- und fixierbare Rastelemente 10 trägt. Die Rastelemente 10 dienen dazu, den Rastkolben 8 in der verriegelten Stellung während eines definierten Zustandes zu sperren. Dazu weist der Rastkolben 8 eine Innenkontur 21 und einen in Längsrichtung wirksamen Rastanschlag 11 an der Innenkontur 21 auf. Am Festlager 9 stützt sich eine Vorspannfeder 18 ab, die an dem Rastkolben 8 angreift, wozu dieser eine Abstützfläche 19 aufweist, wie Fig. 5 zeigt. Über das Festlager 9 am Gehäuse 2 kann auch ein Eintauchweg des Rastkolbens 8 bestimmt werden, wozu das Festlager 9 eine Begrenzungsfläche 20 aufweisen kann. Darüber hinaus kann das Festlager 9 gegenüber dem Gehäuse 2 in Längsrichtung verschiedene Positionen einnehmen.

Der definierte Zustand kann bestimmt sein durch ein die Zuhaltung realisierendes Signal an eine Hubvorrichtung 12 zum Bewegen und Halten der Rastelemente 10 in einer fixierenden Schub- oder Drehlage in der verriegelten Stellung.

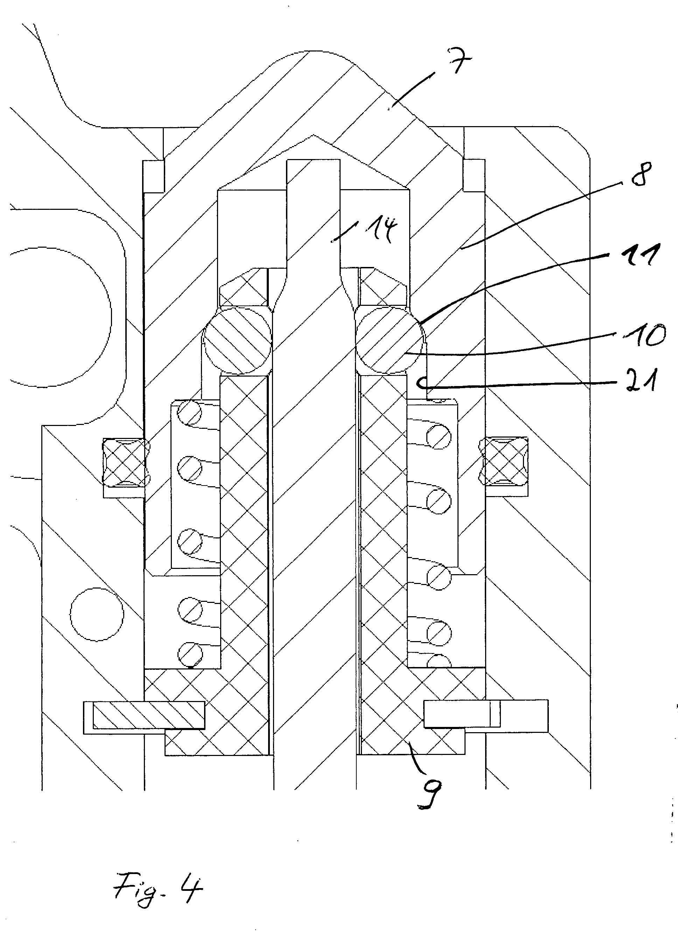

Die Hubvorrichtung 12 ist gemäß Fig. 1 beispielsweise als ein bistabiler Hubmagnet ausgebildet, der einen Sperrstift bzw. eine Sperrachse 13 axial in Kolbenlängsrichtung zwischen einer entriegelten Stellung und einer verriegelten Stellung des Rastkolbens 8 verfährt. Die Rastelemente 10, die beispielsweise als Stifte, Kugeln, Walzen oder Hemmteile ausgebildet sind, werden mittels der axial verschiebbaren Sperrachse/Sperrstift 13 radial verschiebbar bewegt, wozu die Sperrachse/Sperrstift 13 einen mit den Rastelementen 10 in Eingriff bringbaren Rastkonus 14 aufweist, wie Fig. 2 und Fig. 3 zeigen. Fig. 2 zeigt den Rastkolben 8 in der entriegelten Stellung, da der Rastkonus 14 mit seinem endseitigen kleinen Durchmesser den Rastelementen 10 Bewegungsspiel belässt, so dass es zu keinem klemmenden Rasteingriff mit dem Anschlag 11 an der Innenkontur 21 des Rastkolbens 8 kommt. Gemäß Fig. 4 ist der Rastkonus 14 mit seinem endseitigen großen Durchmesser in Eingriff mit den Rastelementen 10 und klemmt/presst diese gegen den Anschlag 11, wodurch eine Verriegelungskraft auf den Rastkolben 8 ausgeübt wird mit der Folge, dass der Rastkolben 8 nicht mehr einfedern kann. Der Rastkolben 8 befindet sich dann in der verriegelten Stellung, wie in Fig. 4 dargestellt ist.

Die an der Eingriffszunge 5 des Betätigers 1 ausgebildete Eingriffsmulde 6 ist vorzugsweise rotationssymmetrisch ausgebildet für einen Wirkeingriff mit einem kopfseitigen kegelförmigen Ende 7 des Rastkolbens 8 als formangepasstes Gegenstück.

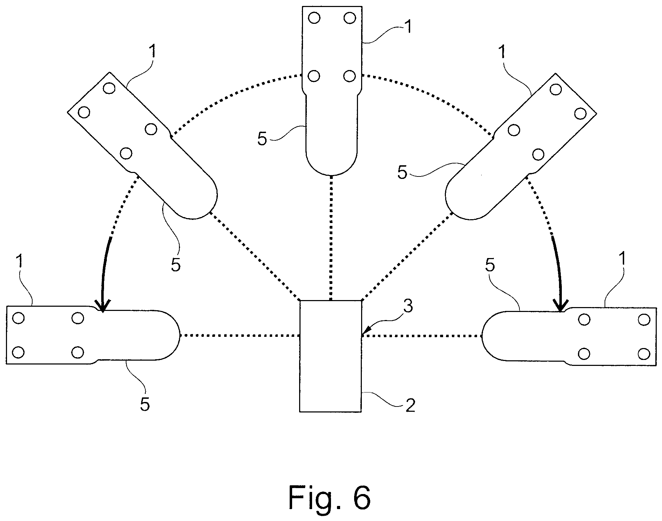

Das Gehäuse 2 weist vorzugsweise eine maulartige Gehäuseöffnung 15 auf, in der die Aufnahme 3 vorgesehen ist. Die Aufnahme 3 kann einen Einbring-/Schwenkbereich für die Eingriffszunge 5 in der entriegelten Stellung von mindestens 180° besitzen, wie Fig. 6 zeigt.

Die Eingriffszunge 5 trägt ferner ein elektronisches Identifizierungselement, insbesondere einen RFID-Tag 16. Das Gehäuse 2 weist im Bereich der Aufnahme 3 eine Sensoreinrichtung 17 zum Erkennen von dem elektronischen Identifizierungselement auf.

Als Schutztür kann gemäß der Erfindung jede Art Tür, Klappe, Deckel, Haube, Schiebetür, Schwenktür oder dergleichen verstanden werden. Gemäß einer Weiterbildung der Erfindung kann eine Vorrichtung zum Schalten einer elektrischen Verbindung, insbesondere eines Sicherheitsschalters einer Sicherheitskette für den Betrieb einer Maschine, vorgesehen sein, wobei zum Schalten der elektrischen Verbindung der Betätiger 1 in Wirkverbindung mit einem Schalterkopf (nicht dargestellt) bringbar ist. Weiterhin kann eine Hilfsentriegelung vorgesehen sein.

Wie in Fig. 1 dargestellt, kann das Gehäuse 2 in einen Elektronikgehäuseteil 2.1 sowie einen Mechanikgehäuseteil 2.2 geteilt sein. Die Idee der Trennung von Elektronik und Mechanik ermöglicht ein modulares Konzept zu verfolgen, welches ermöglicht, die Mechanik für weitere Produktfamilien nutzen zu können. Das Gehäuse 2 ist daher vorteilhafterweise in zwei Teile unterteilt.

Nachfolgend ist die mechanische Funktionsweise der erfindungsgemäßen Verriegelungseinrichtung mit Zuhaltung erläutert.

Ausgehend von einer geschlossenen Schutztür (nicht dargestellt) befindet sich der Betätiger 1 mit seiner Betätigerzunge 5 in der Eingriffsmulde 6, und der Rastkolben 8 liegt mit seinem kopfseitigen Ende 7 in der Eingriffsmulde 6. Ist dieser Zustand erreicht und wird vorzugsweise zusätzlich das RFID-Tag 16, das sich in der Betätigerzunge 5 befinden kann, durch eine vorgesehene Sensoreinrichtung 17 am Gehäuse 2 erkannt, kann die Zuhaltung, sprich die Schutztüre, gesperrt/verriegelt werden.

Die Verriegelung erfolgt beispielsweise durch die Bewegung der Sperrachse/des Sperrstiftes 13 in Richtung Rastkolben 8. Hierdurch werden die Rastelemente 10, beispielsweise Kugeln, die sich in einem Kugellager des Festlagers 9 befinden, radial verfahren, hier beispielsweise nach außen bewegt. Befinden sich nun die Rastelemente 10, insbesondere die Kugeln, beispielsweise vier umfänglich verteilt angeordnete Kugeln, nach außen gepresst in einem Form-/Reibschluss mit dem Anschlag am Rastkolben 8, kann dieser nicht wieder eintauchen. Folglich ist ein Herausziehen der Betätigerzunge 5, also des Betätigers 1, nicht mehr möglich. Die Schutztür ist somit gesperrt/verriegelt.

Die Arretierungsmulde/Eingriffsmulde 6 ermöglicht, dass der Betätiger 1 in einem 180° Winkel stufenlos in die Aufnahme 3 bzw. einen Betätigerschlitz, der vorzugsweise maulartig ausbildbar ist, eingeführt werden kann. Die Anfahrtsrichtungen sind damit besonders variabel und winkelflexibel, wie Fig. 6 zeigt.

## Patentansprüche

1. Verriegelungseinrichtung mit Zuhaltung für Schutztüren mit einem an einem beweglichen Türteil befestigbaren mechanischen Betätiger (1) und einem mit dem Betätiger (1) zusammenwirkenden, an einem Türgegenstück befestigbaren Gehäuse (2), das eine Aufnahme (3) aufweist, der der Betätiger (1) zuführbar ist, und das Gehäuse (2) ein Sperrglied (4) aufweist, das zwischen einer entriegelten Stellung, bei der der Betätiger (1) freigebbar ist, und einer verriegelten Stellung, bei der der Betätiger (1) gegenüber der Aufnahme (3) festlegbar ist, verlagerbar ist, wobei der Betätiger (1) eine Eingriffszunge (5) mit einer Eingriffsmulde (6) für einen mechanischen Wirkeingriff mit einem kopfseitigen Ende (7) eines als Rastkolben (8) ausgebildeten Sperrglieds (4) aufweist, der Rastkolben (8) in dem Gehäuse (2) in einer Kolbenlängsrichtung federvorgespannt längsverschieblich geführt ist gegenüber einem inneren, buchsenförmigen Festlager (9), das radial verschieb- und fixierbare Rastelemente (10) trägt, die den Rastkolben (8) an seiner Innenkontur (21) in der verriegelten Stellung während eines definierten Zustandes sperren, wozu der Rastkolben (8) einen in Längsrichtung wirksamen Rastanschlag (11) an der Innenkontur (21) aufweist, **dadurch gekennzeichnet, dass** die Eingriffszunge (7) ein elektronisches Identifizierungselement trägt, und das Gehäuse (2) im Bereich der Aufnahme (3) eine Sensoreinrichtung (17) zum Erkennen von dem elektronischen Identifizierungselement aufweist.

2. Verriegelungseinrichtung nach Anspruch 1, **dadurch gekennzeichnet, dass** der definierte Zustand bestimmt ist durch ein die Zuhaltung realisierendes Signal an eine Hubvorrichtung (12) zum Bewegen und Halten der Rastelemente (10) in einer fixierenden Schub- oder Drehlage in der verriegelten Stellung.

3. Verriegelungseinrichtung nach Anspruch 2, **dadurch gekennzeichnet, dass** die Hubeinrichtung (12) als bistabiler Hubmagnet ausgebildet ist.

4. Verriegelungseinrichtung nach einem der Ansprüche 1 bis 3, **dadurch gekennzeichnet, dass** die Rastelemente (10) als Stifte, Kugeln, Walzen oder Hemmteile ausgebildet sind.

5. Verriegelungseinrichtung nach einem der Ansprüche 1 bis 4, **dadurch gekennzeichnet, dass** die Rastelemente (10) mittels einer axial verschiebbaren Sperrachse oder Sperrstift (13) radial verschiebbar sind, wozu die Sperrachse oder der Sperrstift (13) einen mit den Rastelementen (10) in Eingriff bringbaren Rastkonus (14) aufweist.

6. Verriegelungseinrichtung nach einem der Ansprüche 1 bis 5, **dadurch gekennzeichnet, dass** die an der Eingriffszunge (5) des Betätigers (1) ausgebildete Eingriffsmulde (6) rotationssymmetrisch ist für einen Wirkeingriff mit einem kopfseitigen kegelförmigen Ende (7) des Rastkolbens (8) als Gegenstück.

7. Verriegelungseinrichtung nach einem der Ansprüche 1 bis 6, **dadurch gekennzeichnet, dass** das Gehäuse (2) eine maulartige Gehäuseöffnung aufweist, in der die Aufnahme (3) vorgesehen ist.

8. Verriegelungseinrichtung nach einem der Ansprüche 1 bis 7, **dadurch gekennzeichnet, dass** die Aufnahme (3) einen Einbring-/Schwenkbereich für die Eingriffszunge (5) in der entriegelten Stellung von mindestens 180° besitzt.

9. Verriegelungseinrichtung nach einem der Ansprüche 1 bis 8, **dadurch gekennzeichnet, dass** das Identifizierungselement ein RFID-Tag (16) ist.

10. Verriegelungseinrichtung nach einem der Ansprüche 1 bis 9, **dadurch gekennzeichnet, dass** als Schutztür eine Tür, Klappe, Deckel, Haube, Schiebetür, Schwenktür oder dergleichen vorgesehen ist.

11. Verriegelungseinrichtung nach einem der Ansprüche 1 bis 10, **dadurch gekennzeichnet, dass** eine Vorrichtung zum Schalten einer elektrischen Verbindung, insbesondere eines Sicherheitsschalters einer Sicherheitskette für den Betrieb einer Maschine, vorgesehen ist, wobei zum Schalten der elektrischen Verbindung der Betätiger (1) in Wirkverbindung mit einem Schalterkopf bringbar ist.

## Claims

1. Locking device having a guard lock for safety doors, comprising a mechanical actuator (1) which can be fastened on a movable door part and a housing (2) which interacts with the actuator (1) and can be fastened to a door counterpart, which housing comprises a receptor (3) to which the actuator (1) can be inserted, and the housing (2) comprises a locking member (4) which is displaceable between an unlocked position, in which the actuator (1) can be released, and a locked position, in which the actuator (1) can be fixed relative to the receptor (3), wherein the actuator (1) comprises an engagement tongue (5) having an engagement recess (6) for a mechanical operative engagement with a head end (7) of a locking member (4) in form of an engagement plunger (8), the engagement plunger (8) being guided in the housing (2) so as to be longitudinally displaceable in a spring-biased manner in a plunger longitudinal direction relative to an inner, bush-shaped fixed bearing (9) which carries radially displaceable and fixable engagement elements (10) which lock the engagement plunger (8) at its inner contour (21) in the locked position during a defined state, for which purpose the engagement plunger (8) comprises an engagement stop (11) at the inner contour (21), which acts in the longitudinal direction, **characterized in that** the engagement tongue (7) is provided with an electronic identification element, and the housing (2) comprises a sensor device (17) for detecting the electronic identification element in an area of the receptor (3).

2. Locking device according to claim 1, **characterized in that** the defined state is determined by a signal causing the guard lock at a lifting device (12) to move and to hold the engagement elements (10) in a fixing pushed-in or turned position in the locked position.

3. Locking device according to claim 2, **characterized in that** the lifting device (12) is a bistable solenoid.

4. Locking device according to one of claims 1 to 3, **characterized in that** the engagement elements (10) are pins, balls, rollers or setting parts.

5. Locking device according to one of claims 1 to 4, **characterized in that** the engagement elements (10) can be displaced radially by means of an axially displaceable locking shaft or locking rod (13), for which purpose the locking shaft or locking rod (13) has an engagement cone (14) which can be brought into engagement with the engagement elements (10).

6. Locking device according to any one of claims 1 to 5, **characterized in that characterized in that** the engagement recess (6) formed on the engagement tongue (5) of the actuator (1) is rotationally symmetrical for an operative engagement with a conical head end (7) of the engagement plunger (8) as a counterpart.

7. Locking device according to any one of claims 1 to 6, **characterized in that characterized in that** the housing (2) comprises a mouth-like housing opening in which the receptor (3) is provided.

8. Locking device according to any one of claims 1 to 7, **characterized in that characterized in that** the receptor (3) comprises an insertion/pivot range for the engagement tongue (5) in the unlocked position of at least 180°.

9. Locking device according to any one of claims 1 to 8, **characterized in that** the identification element is an RFID tag (16).

10. Locking device according to one of claims 1 to 9, **characterized in that** a door, flap, cover, hood, sliding door, swing door or the like is provided as the safety door.

11. Locking device according to one of claims 1 to 10, **characterized in that** a device for switching an electrical connection, in particular a safety switch of a safety chain for the operation of a machine, is provided, wherein for switching the electical connention, the actuator (1) can be brought into operative connection with a switch head.

## Revendications

1. Système de verrouillage avec une gâchette pour des portes de protection avec un actionneur (1) mécanique pouvant être fixé sur une partie de porte mobile et un boîtier (2) coopérant avec l'actionneur (1), pouvant être fixé sur une contre-pièce de porte, qui présente un logement (3), auquel l'actionneur (1) peut être amené, et le boîtier (2) présente un organe de blocage (4), qui peut être déplacé entre une position déverrouillée, dans laquelle l'actionneur (1) peut être débloqué, et une position verrouillée, dans laquelle l'actionneur (1) peut être fixé par rapport au logement (3), dans lequel l'actionneur (1) présente une languette de prise (5) avec une cavité de prise (6) pour une prise active mécanique avec une extrémité côté tête (7) d'un organe de blocage (4) réalisé en tant que piston d'enclenchement (8), le piston d'enclenchement (8) est guidé de manière à pouvoir coulisser longitudinalement de manière précontrainte par ressort dans une direction longitudinale de piston dans le boîtier (2) par rapport à un palier fixe (9) intérieur en forme de douille, qui supporte radialement des éléments d'enclenchement (10) pouvant être coulissés et fixés, qui bloquent le piston d'enclenchement (8) sur son contour intérieur (21) dans la position verrouillée pendant un état défini, le piston d'enclenchement (8) présentant à cet effet sur le contour intérieur (21) une butée d'enclenchement (11) active dans la direction longitudinale, **caractérisé en ce que** la languette de prise (7) porte un élément d'identification électronique, et le boîtier (2) présente dans la zone du logement (3) un système de capteur (17) pour identifier l'élément d'identification électronique.

2. Système de verrouillage selon la revendication 1, **caractérisé en ce que** l'état défini est déterminé par un signal réalisant la gâchette sur un dispositif de levage (12) pour déplacer et maintenir les éléments d'enclenchement (10) dans une position de poussée ou de rotation de blocage dans la position verrouillée.

3. Système de verrouillage selon la revendication 2, **caractérisé en ce que** le système de levage (12) est réalisé en tant qu'aimant de levage bistable.

4. Système de verrouillage selon l'une quelconque des revendications 1 à 3, **caractérisé en ce que** les éléments d'enclenchement (10) sont réalisés en tant que tiges, billes, cylindres ou parties d'arrêt.

5. Système de verrouillage selon l'une quelconque des revendications 1 à 4, **caractérisé en ce que** les éléments d'enclenchement (10) peuvent être coulissés de manière radiale au moyen d'un axe de blocage ou d'une tige de blocage (13) pouvant être coulissé(e) axialement, l'axe de blocage ou la tige de blocage (13) présentant à cet effet un cône d'enclenchement (14) pouvant être amené en prise avec les éléments d'enclenchement (10).

6. Système de verrouillage selon l'une quelconque des revendications 1 à 5, **caractérisé en ce que** la cavité de prise (6) réalisée sur la languette de prise (5) de l'actionneur (1) est symétrique en rotation pour une prise active avec une extrémité conique côté tête (7) du piston d'enclenchement (8) en tant que contre-pièce.

7. Système de verrouillage selon l'une quelconque des revendications 1 à 6, **caractérisé en ce que** le boîtier (2) présente une ouverture de boîtier de type mâchoire, dans laquelle le logement (3) est prévu.

8. Système de verrouillage selon l'une quelconque des revendications 1 à 7, **caractérisé en ce que** le logement (3) possède une zone d'introduction/de pivotement pour la languette de prise (5) dans la position déverrouillée d'au moins 180°.

9. Système de verrouillage selon l'une quelconque des revendications 1 à 8, **caractérisé en ce que** l'élément d'identification est une étiquette RFID (16).

10. Système de verrouillage selon l'une quelconque des revendications 1 à 9, **caractérisé en ce qu'**une porte, une trappe, un couvercle, un capot, une porte coulissante, une porte pivotante ou similaire est prévue ou prévue en tant que porte de protection.

11. Système de verrouillage selon l'une quelconque des revendications 1 à 10, **caractérisé en ce qu'**un dispositif est prévu pour commuter une liaison électrique, en particulier un interrupteur de sécurité d'une chaîne de sécurité pour le fonctionnement d'une machine, dans lequel l'actionneur (1) peut être amené en liaison fonctionnelle avec une tête d'interrupteur pour commuter la liaison électrique.
